# EUROPEAN PATENT APPLICATION

(11) **EP 4 178 304 A1**
(43) Date of publication of application: **10.05.2023**
(21) Application number: 21833415.9
(22) Date of filing: 01.07.2021
(51) Int. Cl.: H04W 74/08

(54) **RANDOM ACCESS METHOD AND APPARATUS, AND NETWORK SIDE DEVICE**

(30) Priority: 03.07.2020 CN 202010632461
(71) Applicant: Vivo Mobile Communication Co., Ltd., Dongguan, Guangdong 523863 (CN)
(72) Inventor: WEN, Ming, Dongguan, Guangdong 523863 (CN); YANG, Xiaodong, Dongguan, Guangdong 523863 (CN); LIU, Jinhua, Dongguan, Guangdong 523863 (CN)
(74) Representative: Raffay & Fleck
(86) International application number: PCT/CN2021/104017
(87) International publication number: WO 2022/002203

(57) **Abstract**

Disclosed in the embodiments of the present application are a random access method and apparatus, and a network side device, being used for solving the problems in the prior art of failing to define a behavior when an IAB node receives a backoff indicator (BI), and affecting the effectiveness of communication. The method can be applied to the IAB node and comprises: in a random access process that is initiated by means of a first random access resource, if a BI is received, performing one of the following operations: generating a wait time according to the BI, and after the wait time is over, initiating the random access process again; and ignoring the BI, and by means of the first random access resource or a second random access resource, initiating the random access process again

## Description

### CROSS-REFERENCE TO RELATED APPLICATIONS

This application claims priority to Chinese Patent Application No. 202010632461.6 filed in China on July 3, 2020, and entitle "RANDOM ACCESS METHOD AND APPARATUS, AND NETWORK-SIDE DEVICE" which is incorporated herein by reference in its entirety.

### TECHNICAL FIELD

This application belongs to the field of communications technologies, and specifically, to a random access method and apparatus, and a network-side device.

### BACKGROUND

In Release 15 (Rel-15), the backoff indicator (Backoff Indicator, BI) is used for indicating that the terminal is prohibited from accessing the network for a period of time.

Integrated access and backhaul (Integrated Access and Backhaul, IAB) nodes are usually configured with operable common random access resources and/or IAB dedicated random access resources. The behavior of IAB nodes when they receive BI is not defined in the related art, so that the IAB nodes cannot perform the next action after receiving the BI, which affects the communication effectiveness.

### SUMMARY

An objective of embodiments of this application is to provide a random access method and apparatus, and a network-side device, to resolve a problem that a behavior of an IAB node when receiving a BI is not defined in the related art, affecting the communication effectiveness.

To resolve the technical problem above, this application is implemented as follows.

According to a first aspect, a random access method is provided, applied to an IAB node and including: performing at least one of the following in a case of receiving a backoff indicator during a random access process initiated through a first random access resource: generating a time delay according to the backoff indicator, and initiating the random access process again after the time delay expires; and ignoring the backoff indicator, and initiating the random access process again through the first random access resource or a second random access resource.

According to a second aspect, a random access apparatus is provided, including: a processing module, configured to perform at least one of the following in a case of receiving a backoff indicator during a random access process initiated through a first random access resource: generating a time delay according to the backoff indicator, and initiating the random access process again after the time delay expires; and ignoring the backoff indicator, and initiating the random access process again through the first random access resource or a second random access resource.

According to a third aspect, a network-side device is provided, including a processor, a memory, and a program or instructions stored on the memory and runnable on the processor, where the program or instructions, when being executed by the processor, implement the method according to the first aspect.

According to a fourth aspect, a readable storage medium is provided, storing a program or instructions, where the program or instructions, when being executed by a processor, implement the method according to the first aspect.

According to a fifth aspect, a chip is provided, including a processor and a communication interface, where the communication interface is coupled to the processor, and the processor is configured to run a program or instructions to implement the method according to the first aspect.

In the embodiments of this application, the IAB node initiates the random access through the first random access resource, and may generate the time delay according to the backoff indicator in a case of receiving the backoff indicator and wait, and initiate the random access process again after the time delay expires. The IAB node may further ignore the backoff indicator, that is, the IAB node may not wait, but directly initiate the random access again through the first random access resource or the second random access resource. The embodiments of this application defines the behavior of the IAB node when receiving the backoff indicator, facilitating to improve the communication effectiveness. In addition, the embodiments of this application may reduce the time delay of accessing of the IAB node and/or a competition risk of the random recess resources.

### BRIEF DESCRIPTION OF THE DRAWINGS

FIG. 1 is a block diagram of wireless communication system according to an embodiment of this application;
FIG. 2 is a schematic flowchart of a random access method according to an embodiment of this application;
FIG. 3 is a schematic diagram of a MAC subheader format according to an embodiment of this application;
FIG. 4 is a schematic diagram of a MAC subheader format according to an embodiment of this application;
FIG. 5 is a schematic flowchart of a random access method according to an embodiment of this application;
FIG. 6 is a schematic structural diagram of a random access apparatus according to an embodiment of this application;
FIG. 7 is a schematic structural diagram of a communication device according to an embodiment of this application; and
FIG. 8 is a schematic structural diagram of a network-side device according to an embodiment of this application.

### DETAILED DESCRIPTION

The following clearly and completely describes the technical solutions in embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application without creative efforts shall fall within the protection scope of this application.

The specification and claims of this application, and terms "first", "second", and the like are used to distinguish similar objects, but are not used to describe a specific sequence or order. It may be understood that the data used in such a way is interchangeable in proper circumstances, so that the embodiments of this application described herein can be implemented in other sequences than the sequence illustrated or described herein, and the objects distinguished through "first" and "second" are generally of a same type and the number of the objects are not limited, for example, a first object may be one or more than one. In addition, "and/or" in this specification and the claims represents at least one of the connected objects, and a character "/" used herein indicates an "or" relationship between associated obj ects.

It is to be noted that the technologies described in the embodiments of this application are not limited to a long term evolution (Long Term Evolution, LTE) / LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described can be applied to the systems and radio technologies mentioned above, and can also be applied to other systems and radio technologies. However, the following exemplarily describes a new radio (New Radio, NR) system, and NR terms are used in most of the descriptions below, although these technologies can also be applied to applications other than the NR system, for example, the 6^{th} generation (6^{th} Generation, 6G) communication system.

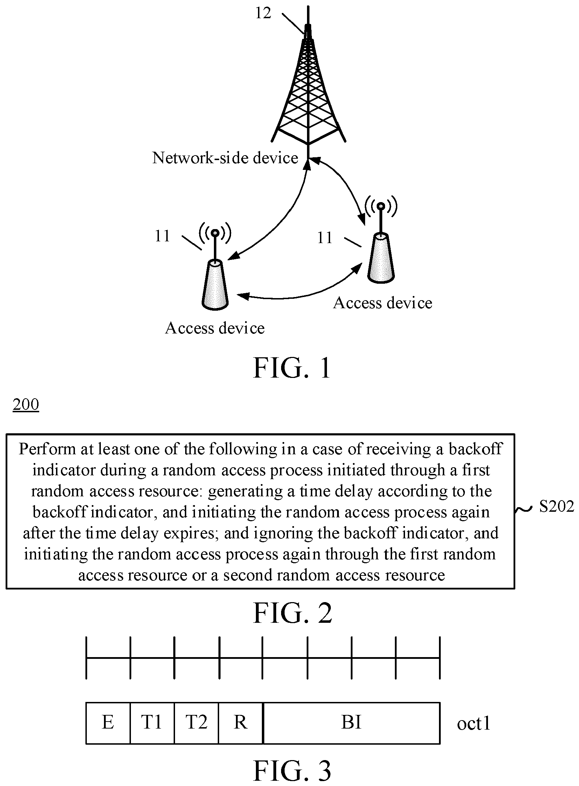

FIG. 1 shows a block diagram of a wireless communication system to which an embodiment of this application is applicable. The wireless communication system includes an access device 11 and a network-side device 12. The access device 11 may be a terminal or an IAB node, and the IAB node may include a mobile termination (Mobile Termination, MT) functional section and a distributed unit (Distributed Unit, DU) functional section. A DU may provide a network service for other access devices, and an MT may be regarded as a normal terminal with a function of a normal terminal access network side, and the like. The terminal described above may be a terminal side device, such as a mobile phone, a tablet computer (Tablet Computer), a laptop computer (Laptop Computer) also referred to as a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), a wearable device (Wearable Device), an in-vehicle device (VUE), or a pedestrian terminal (PUE). The wearable device includes: a hand ring, a headset, a pair of glasses, or the like. It is to be noted that, a specific type of the IAB node is not limited in the embodiments of this application. The network-side device 12 may be a base station or a core network, where the base station may be referred to as a node B, an evolved node B, an access point, a base transceiver station (Base Transceiver Station, BTS), a radio base station, a radio transceiver, a basic service set (Basic Service Set, BBS), an extended service set (Extended Service Set, ESS), a next generation node B (gNB), a home node B, a home evolved node B, a WLAN access point, a WiFi node, a transmitting receiving point (Transmitting Receiving Point, TRP), or an other proper term in the field as long as reaching the same technical effect. The base station is not limited to a specific technical word. It is to be noted that, only a base station in a NR system is taken as an example in this embodiment of this application, but a specific type of the base station is not limited.

The random access method and apparatus, and the network-side device according to the embodiments of this application are described in detail below with reference to the accompany drawings through specific embodiments and application scenarios thereof.

The behavior of IAB nodes when they receive BI is not defined in the related art, so that the IAB nodes cannot perform the next action after receiving the BI, which affects the communication effectiveness. Assuming that the IAB node follows a BI instruction manner of the terminal in the related art, the IAB node will prohibit, after receiving the BI in an existing format (as long as any of the random access resources are congested), the IAB-MT from using all the random access resources for a period of time, which will cause, in a case that there are still usable random access resources, the IAB node to delay initiating the random access process according to the received BI and increase the random access delay of the IAB node.

To solve the problem of not defining the behavior of the IAB node when the IAB node receives the BI and affecting the communication effectiveness in the related art, as shown in FIG. 2, an embodiment of this application provides a random access method 200. The method may be performed by an integrated access and backhaul (Integrated Access and Backhaul, IAB) node. In other words, the method may be performed by software or hardware installed on the IAB node, and the method includes the following steps.

S202: Perform at least one of the following in a case of receiving a backoff indicator (Backoff Indicator, BI) during a random access process initiated through a first random access resource: generating a time delay according to the backoff indicator, and initiating the random access process again after the time delay expires; and ignoring the backoff indicator, and initiating the random access process again through the first random access resource or a second random access resource.

The generating a time delay according to the backoff indicator, which is mentioned in the embodiment, specifically may be generating a time delay value, for example, 20 milliseconds, according to the backoff indicator.

Optionally, the foregoing initiating the random access process again after the time delay expires includes: initiating the random access process again through the first random access resource or the second random access resource after the time delay expires.

Optionally, an action of the performing one of the following (the steps of the at least one of the following are ignored there, and reference may be made to the description of S202) mentioned in S202 includes: performing the at least one of the following according to a predefined rule, the predefined rule including: a random access resource type to which the backoff indicator is applicable, and/or, whether the backoff indicator is applicable to the IAB node, where the mentioned random access resource type includes the first random access resource and/or the second random access resource.

The foregoing predefined rule may be protocol agreed, pre-configured, or indicated by received indication information.

In this embodiment of this application, a network-side node selected by the IAB node is configured with the first random access resource and the second random access resource simultaneously. The network-side node may be an upstream access point of the IAB node, for example, a parent IAB node (parent IAB node) or an IAB-donor (IAB-donor); and the network-side node may further be a base station, or the like.

In an example, the first random access resource is an IAB dedicated random access resource, and the second random access resource is a common random access resource.

In another example, the first random access resource is a common random access resource, and the second random access resource is an IAB dedicated random access resource.

The common random access resource may be configured through a rach-ConfigCommon parameter of a random access channel-ConfigCommon (RACH-ConfigCommon) type, and the rach-ConfigCommon parameter may configure a random access resource of a public common terminal (for example, UE) in a cell, including a physical random access channel-ConfigurationIndex (prach-ConfigurationIndex (prach-ConfigurationIndex), a PRACH re-transmission parameter, a PRACH transmission time frequency resource, a corresponding relationship between a PRACH resource (preamble, PRACH time frequency resource) and a synchronization signal and physical broadcast channel block (Synchronization Signal and physical broadcast channel Block, SSB), and the like, which are referred to as the common random access resources in this embodiment of this application.

The IAB dedicated random access resource may be configured through a rach-ConfigCommonIAB parameter of a RACH-ConfigCommonIAB type, and the rach-ConfigCommonalAB parameter is used for configuring a physical random access channel (Physical Random Access Channel, PRACH) resource usable by an IAB-mobile termination (IAB-Mobile Termination, IAB-MT), which is referred to as the IAB dedicated random access resource in this embodiment of this application.

Before S202, the IAB node may initiate the random access process through the first random access resource, for example, transmitting a random access preamble (random access preamble) to the base station (or an IAB upstream node, or the like, the base station is taken as an example for description subsequently) on the first random access resource. The base station may transmit a random access response (Random Access Response, RAR) message according to a current load situation. The RAR message may alternatively be referred to as a Msg 2 in a four-step random access process, or may be be referred to as a Msg B in a two-step random access process.

If the load of a current base station is relatively large, the RAR message transmitted by the base station to the IAB node may carry the backoff indicator. In this way, the IAB node may follow the steps of S202.

For the two-step random access process, the receiving a backoff indicator mentioned in S202 includes: receiving an RAR message, where the RAR message includes a T1 indication field and a T2 indication field, a value of the T1 indication field is 0, and a value of the T2 indication field is 0.

FIG. 3 shows that the two-step random access process includes an MAC subheader format of the RAR message of the backoff indicator (BI). In FIG. 3, an E indication field is used for indicating whether there exist other MAC subheaders after the MAC subheader. An R indication field is a reserved field. The T1 indication field is used for indicating whether the MAC subheader includes a random access preamble ID or T2 indication field. The T1 indication field is set to "1" to indicate that the random access preamble ID exists in the MAC subheader; and the T1 indication field is set to "0" to represent that the T2 indication field exists in the MAC subheader. The T2 indication field is used for indicating whether the MAC subheader includes a backoff indicator (BI) indication field or an MAC service data unit (Service Data Unit, SDU) indication field. The T2 indication field is set to "0" to indicate that a backoff indicator field (a BI field in FIG. 3) exists in the MAC subheader; and the T2 indication field is set to "1" to indicate that the MAC SDU indication field exists in the MAC subheader. The backoff indicator field (that is the BI indication field) is used for indicating an overload situation of the cell, and a size of the BI indication field may be 4 bits.

For the four-step random access process, the receiving a backoff indicator mentioned in S202 includes: receiving an RAR message. The RAR message includes a T indication field, and a value of the T indication field is 0.

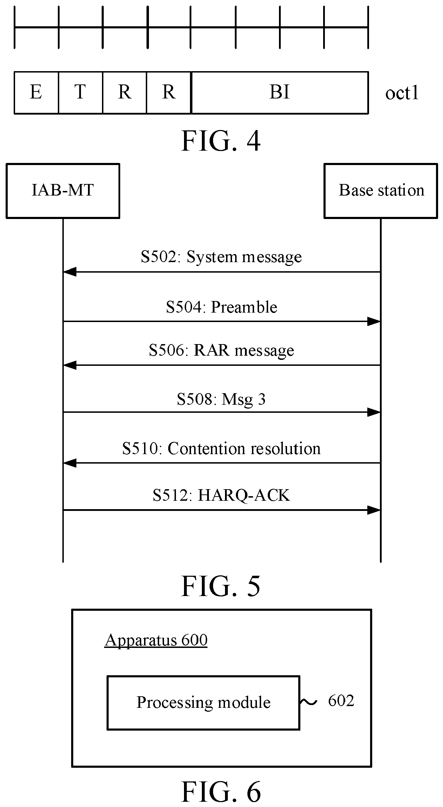

FIG. 4 shows that the four-step random access process includes an MAC subheader format of the RAR message of the backoff indicator (BI). In FIG. 4, an E indication field is used for indicating whether there exist other MAC subheaders after the MAC subheader. An R indication field is a reserved field. The T indication field is used for indicating whether the MAC subheader includes a random access preamble ID or a BI indication field. The T indication field is set to "1" to indicate that the random access preamble ID exists in the MAC subheader; and the T indication field is set to "0" to represent that the BI indication field exists in the MAC subheader.

The BI indication field shown in FIG. 3 or FIG. 4 indicates an index value. For example, when BI is an index value of 6, a represented value is 80 ms. In this way, the generating a time delay according to the backoff indicator mentioned in S202 may include: generating, by the IAB node, a random number between 0 and 80 ms, for example, 58 ms, and then no longer initiating an initial access to the cell within the 58 ms, and initiating the random access process after the 58 ms expires.

In the random access method according to the embodiments of this application, the IAB node initiates the random access through the first random access resource, and may generate the time delay according to the backoff indicator in a case of receiving the backoff indicator and wait, and initiate the random access process again after the time delay expires. The IAB node may further ignore the backoff indicator, that is, the IAB node may not wait, but directly initiate the random access again through the first random access resource or the second random access resource. The embodiments of this application defines the behavior of the IAB node when receiving the backoff indicator, facilitating to improve the communication effectiveness. In addition, the embodiments of this application may reduce the time delay of accessing of the IAB node and/or a competition risk of the random recess resources.

To describe the random access method according to the embodiments of this application in detail, the following is described with combination to several specific embodiments.

It is to be noted that, the common random access resource mentioned in each embodiment of this application may include a 2-step common random access resource and a 4-step common random access resource; and the IAB dedicated random access resource mentioned in each embodiment of this application may include a 2-step IAB dedicated random access resource and a 4-step IAB dedicated random access resource. In the following description, it is all assumed that the 2-step random access resources or the 4-step random access resources used by the IAB node before and after are consistent. For example, if the IAB node receives a backoff indicator when selecting the 4-step IAB dedicated random access resource for access, the corresponding 4-step common/4-step IAB dedicated random access resource is still used subsequently for access, and generally it is not switched to using the 2-step common/2-step IAB dedicated random access resource for access.

### Embodiment 1

In this embodiment, the first random access resource corresponds to the backoff indicator (BI). Specifically, the IAB-MT is configured with the first random access resource and the second random access resource simultaneously. The IAB-MT initiates the random access (for example, transmitting the random access preamble) through the first random access resource, and the IAB-MT may receive an RAR message (assuming that the IAB-MT cannot obtain an RAR message corresponding to the second random access resource through decoding) corresponding to the first random access resource. Therefore, this embodiment is referred to that the first random access resource corresponds to the backoff indicator (BI) in the RAR message.

In this embodiment, the IAB-MT may use the first random access resource for access, and the RAR message received indicates the existence of a BI field, that is, for the two-step random access process, in the MAC subheader, "T1 = 0, T2 = 0"; and for the four-step random access process, in the MAC subheader, "T = 0". The IAB-MT may perform one of the following method 1 and method 2.

Method 1: the IAB- MT ignores the foregoing backoff indicator, does not wait for any time, and directly uses the first random access resource or the second random access resource for access, that is, initiating the random access process again by using the first random access resource or the second random access resource.

Method 2: the IAB-MT generates the time delay according to a time corresponding to an index (Index) of the BI indication field, and selects the first random access resource or the second random access resource for access after the time delay expires, that is, initiating the random access process again by using the first random access resource or the second random access resource.

Optionally, the first random access resource is an IAB dedicated random access resource, and the second random access resource is a common random access resource.

Optionally, the first random access resource is a common random access resource, and the second random access resource is an IAB dedicated random access resource.

In an example, the first random access resource is an IAB dedicated random access resource, and the IAB-MT in the method 1 does not wait for any time and directly uses the second random access resource, that is, using the common random access resource for access. In this example, the time delay for IAB node access may be reduced, and a competition risk of random access resources may be reduced.

In another example, the first random access resource is an IAB dedicated random access resource, and the IAB-MT in the method 1 does not wait for any time and still uses the first random access resource, that is, still using the IAB dedicated random access resource for access. In this example, the time delay for IAB node access may be reduced. It is considered in this example that after the IAB node is successfully accessed, a distributed unit (Distributed Unit, DU) function of the IAB node may provide a service for more terminals, for example, providing an access service for the terminals, which can reduce the load on the current cell, so that a priority is given to allowing the IAB node to be successfully accessed.

In another one example, the first random access resource is a common random access resource, and the IAB-MT in the method 1 does not wait for any time and directly uses the second random access resource, that is, using the IAB dedicated random access resource for access. In this example, the time delay for IAB node access may be reduced, and a competition risk of random access resources may be reduced.

In another one example, the first random access resource is a common random access resource, and the IAB-MT in the method 1 does not wait for any time and still uses the first random access resource, that is, still using the common random access resource for access. In this example, the time delay for IAB node access may be reduced. It is considered in this example that after the IAB node is successfully accessed, a distributed unit (Distributed Unit, DU) function of the IAB node may provide a service for more terminals, for example, providing an access service for the terminals, which can reduce the load on the current cell, so that a priority is given to allowing the IAB node to be successfully accessed.

### Embodiment 2

In this embodiment, the first random access resource does not correspond to the backoff indicator (BI).

In this embodiment, the IAB-MT is configured with the first random access resource and the second random access resource simultaneously. The IAB-MT may use the first random access resource for access, and the RAR message received indicates the existence of a BI field, that is, for the two-step random access process, in the MAC subheader, "T1 = 0, T2 = 0"; and for the four-step random access process, in the MAC subheader, "T = 0". The IAB-MT may perform one of the following method 1 and method 2.

Method 1: the BI is only applicable to the common random access resource, and is inapplicable to the IAB dedicated random access resource. The method 1 may further be divided into the following two sub-methods.

Method 1a: if an access resource selected by the IAB-MT is the IAB dedicated random access resource, that is, the first random access resource is the IAB dedicated random access resource, and the second random access resource is the common random access resource, the IAB-MT ignores the foregoing backoff indicator, does not wait for any time, and uses the IAB dedicated random access resource or the common random access resource to initiate the random access process again.

Method 1b: if an access resource selected by the IAB-MT is the common random access resource, that is, the first random access resource is the common random access resource, and the second random access resource is the IAB dedicated random access resource, the IAB-MT generates the time delay according to a time indicated by an Index of the BI, and selects the IAB dedicated random access resource or the common random access resource for access after the time delay expires.

Method 2: the BI is applicable to the common random access resource and the IAB dedicated random access resource.

The IAB-MT generates the time delay according to a time indicated by an Index of the BI, and selects the IAB dedicated random access resource or the common random access resource for access after the time delay expires.

In this example, the first random access resource is the common random access resource, and the second random access resource is the IAB dedicated random access resource; or the first random access resource is the IAB dedicated random access resource, and the second random access resource is the common random access resource.

### Method 3: the BI is inapplicable to the IAB-MT.

The IAB- MT ignores a BI indication in the RAR, that is, when selecting any random access resource for access, the IAB-MT does not wait for any time, and directly initiates the random access process again through the first random access resource or the second random access resource.

Optionally, the IAB-MT may perform any one of method 1 to 3 according to a predefined rule, and the predefined rule includes: a random access resource type to which the backoff indicator is applicable, and/or, whether the backoff indicator is applicable to the IAB node, where the mentioned random access resource type includes the first random access resource and/or the second random access resource.

The foregoing predefined rule may be protocol agreed, pre-configured, or indicated by received indication information.

In a specific example, the IAB-MT performs any one of method 1 to 3 according to the received indication information, which will constitute method 4 of the embodiment 2 of this application.

Method 4: the random access resource type, or the like, to which the BI is applicable to is indicated through an extra indication.

To adapt to the terminal, this embodiment informs the IAB or the UE of the random access resource type to which the backoff indicator is applicable currently, or the like, through the extra indication.

This embodiment may carry the indication information, for example, an RRC indication, in a system message, and the indication information is used for indicating at least one of the following: the random access resource type to which the backoff indicator is applicable, and whether the backoff indicator is applicable to the IAB node, where the random access resource type includes the first random access resource and/or the second random access resource.

The system message mentioned above may be a master information block (Master Information Block, MIB), or may be a system information block 1 (System Information Block 1, SIB1), or may be another system information block, for example, SIBx, where x represents a number of the system information block, and x may be 2, 3, etc.

Optionally, before S202, the IAB node may further receive the indication information. In an example, the received indication information includes: receiving a radio resource control (Radio Resource Control, RRC) message of a broadcasting type.

In a specific example, the foregoing indication information indicates the random access resource type (one resource type may be indicated or two resource types may be indicated simultaneously) to which the BI transmitted by the base station is applicable and/or whether the BI transmitted by the base station is applicable to the IAB-MT, and the like, and reference may be made to method 1 to 3 of the embodiment 2 and the like for details. In this way, the IAB-MT may perform any one of method 1 to 3 based on the indication information.

### Embodiment 3

In this embodiment, the IAB node is configured with a dedicated parameter through the RRC message, for example, the RRC message is configured with a scaling-factor (scaling-factor) of the BI, and each IAB node may first generate an initial time delay after receiving the BI indication, and then a final time delay may be obtained through multiplying the initial time delay by the scaling-factor, and the scaling-factor may be a positive number less than or equal to 1.

In this way, the generating a time delay according to the backoff indicator mentioned in S202 includes: multiplying a time generated by the backoff indicator by a scaling-factor, to obtain the time delay, where the scaling-factor is a positive number less than or equal to 1.

In this example, specifically, for example, assuming that the scaling-factor is 0.5, when an index value of the BI is 6, a represented value is 80 ms. In example 1, the IAB node generates a random number between 0 and 80 ms, for example, 58 ms, and multiplies the 58 ms by the scaling-factor 0.5 to obtain 29, and then the IAB node does not initiate an initial access to the cell within the 29 ms, and initiates the random access process after the 29 ms expires. In example 2, the IAB node multiplies the 80 ms represented by the index value 6 by the scaling-factor 0.5 to obtain 40, and generates a random number between 0 and 40 ms, for example, 19 ms, and then the IAB node does not initiate an initial access to the cell within the 19 ms.

Optionally, the foregoing scaling-factor is a positive number less than 1, which in this example is equivalent to lowering the time delay for IAB node access. It is considered in this example that after the IAB node is successfully accessed, a distributed unit (Distributed Unit, DU) function of the IAB node may provide a service for more terminals, for example, providing an access service for the terminals, which can reduce the load on the current cell, so that a priority is given to allowing the IAB node to be successfully accessed.

Before this embodiment is performed, the IAB node may receive an RRC message, where the RRC message is used for configuring the scaling-factor for the IAB node.

### Embodiment 4

The embodiment 4 is a specific embodiment, as shown in FIG. 5, including the following steps.

S502: An IAB-MT receives a system message from a base station, where the system message includes MIB and SIB1 messages, and the IAB-MT receives PRACH transmission resource configuration and a preamble sequence related parameter.

S504: The IAB-MT transmits the Preamble through a first random access resource and calculates a random access-radio network temporary identity (Random Access-Radio Network Temporary Identity, RA-RNTI) of its own for recognizing a Msg2.

S506: The IAB-MT blindly examines a physical downlink control channel (Physical Downlink Control Channel, PDCCH) and decodes RAR data carried by a corresponding physical downlink shared channel (Physical Downlink Shared Channel, PDSCH), and the received RAR message indicates the existence of a BI field, as shown in FIG. 3 and FIG. 4.

For a two-step random access process, the received RAR message includes a T1 indication field and a T2 indication field, a value of the T1 indication field is 0, and a value of the T2 indication field is 0.

For a four-step random access process, the received RAR message includes a T indication field, and a value of the T indication field is 0.

Method 1: the BI is only applicable to the common random access resource, and is inapplicable to the IAB dedicated random access resource. The method 1 may further be divided into the following two sub-methods.

Method 1a: the IAB-MT receives the BI when selecting the IAB dedicated random access resource for access, does not wait for any time, and uses the IAB dedicated random access resource or the common random access resource to initiate the random access process again.

Method 1b: the IAB-MT uses the common random access resource for access, generates the time delay according to a time indicated by an Index of the BI, and selects the IAB dedicated random access resource or the common random access resource for access after the time delay expires.

Method 2: the BI is applicable to the common random access resource and the IAB dedicated random access resource.

The IAB-MT generates the time delay according to a time indicated by an Index of the BI when selecting any random resource for access, and is accessed after the time delay expires.

### Method 3: the BI is inapplicable to the IAB-MT.

The IAB- MT ignores a BI indication in the RAR, that is, when selecting any random resource for access, the IAB-MT does not wait for any time.

Method 4: at least one of the following is indicated through an extra indication: the random access resource type to which the BI is applicable, and whether the BIis applicable to the IAB-MT, where the random access resource type includes the first random access resource and/or the second random access resource.

Specifically, in this example, an RRC indicator may be carried in the system message (MIB/SIB1/SIBx) to indicate the random access resource type (one type may be indicated or two types may be indicated simultaneously) to which the BI transmitted by the base station is applicable or whether the BI is applicable to the IAB-MT.

The RRC indicator indicates that the BI is applicable to an IAB dedicated random access resource type, then the IAB-MT generates the time delay according to a time indicated by the Index of the BI after receiving the BI when selecting the IAB dedicated random access resource for access, and selects the IAB dedicated random access resource for access after the time delay expires.

The RRC indicator indicates that the BI is only applicable to a common random access resource type, then the IAB-MT does not wait for any time when using the dedicated random access resource for access.

The RRC indicator indicates that the BI is only applicable to the common random access resource type, then after the IAB-MT uses the common random access resource to initiate the random access and receives the BI, the IAB-MT may use the IAB dedicated random access resource for access and does not wait for any time.

S508: After an access resource given by a network-side is used for access again, if dispatch information that RAR contains a Msg3 is received, the transmission of the Msg3 is performed.

S510: Contention resolution: if PDCCH is detected, a corresponding PDSCH is successfully decoded, and if there is a matching contention resolution identity (for example, contention resolution MAC CE), competition resolution is indicated, and a TC-RNTI is set as a cell-radio network temporary identity (Cell-Radio Network Temporary Identity, C-RNTI).

S512: Once a contention resolution message is successfully decoded, the IAB-MT transmits a hybrid automatic repeat request-acknowledge (Hybrid Automatic Repeat request-ACKnowledge, HARQ-ACK) to the network-side node.

It is to be noted that, the random access method according to the embodiments of this application may be performed by a random access apparatus, or, a control module configured to perform the random access method in the random access apparatus. In an embodiment of this application, that the random access apparatus performs the random access method is taken as an example for description of the random access apparatus according to this embodiment of this application.

FIG. 6 is a schematic structural diagram of a random access apparatus according to this embodiment of this application, and the apparatus may correspond to the IAB node in other embodiments. As shown in FIG. 6, an apparatus 600 includes:

a processing module 602, configured to perform at least one of the following in a case of receiving a backoff indicator during a random access process initiated through a first random access resource: generating a time delay according to the backoff indicator, and initiating the random access process again after the time delay expires; and ignoring the backoff indicator, and initiating the random access process again through the first random access resource or a second random access resource.

In this embodiment of this application, the apparatus 600 initiates the random access through the first random access resource, and may generate the time delay according to the backoff indicator in a case of receiving the backoff indicator and wait, and initiate the random access process again after the time delay expires. The IAB node may further ignore the backoff indicator, that is, the IAB node may not wait, but directly initiate the random access again through the first random access resource or the second random access resource. This embodiment of this application defines the behavior of the IAB node when receiving the backoff indicator, facilitating to improve the communication effectiveness. In addition, this embodiment of this application may reduce the time delay of access and/or a competition risk of the random recess resources.

Optionally, as an embodiment, the processing module 602 may be configured to initiate the random access process again through the first random access resource or the second random access resource after the time delay expires.

Optionally, as an embodiment, the first random access resource is an IAB dedicated random access resource, and the second random access resource is a common random access resource; or, the first random access resource is a common random access resource, and the second random access resource is an IAB dedicated random access resource.

Optionally, as an embodiment, the processing module 602 is configured to perform at least one of the following according to a random access resource type to which the backoff indicator is applicable, and/or, whether the backoff indicator is applicable to the apparatus, where the random access resource type includes the first random access resource and/or the second random access resource.

Optionally, as an embodiment, the processing module 602 ignores the backoff indicator, and initiates the random access process again through the first random access resource or the second random access resource, where the first random access resource is an IAB dedicated random access resource, and the second random access resource is a common random access resource; and the backoff indicator is applicable to the common random access resource, and is inapplicable to the IAB dedicated random access resource.

Optionally, as an embodiment, the processing module 602 generates the time delay according to the backoff indicator, and initiates the random access process again after the time delay expires, where the first random access resource is a common random access resource, and the second random access resource is an IAB dedicated random access resource; and the backoff indicator is applicable to the common random access resource, and is inapplicable to the IAB dedicated random access resource.

Optionally, as an embodiment, the processing module 602 generates the time delay according to the backoff indicator, and initiates the random access process again after the time delay expires, where the first random access resource is a common random access resource, and the second random access resource is an IAB dedicated random access resource, or, the first random access resource is the IAB dedicated random access resource, and the second random access resource is the common random access resource; and the backoff indicator is applicable to the common random access resource and the IAB dedicated random access resource.

Optionally, as an embodiment, the processing module 602 ignores the backoff indicator, and initiates the random access process again through the first random access resource or the second random access resource, where the backoff indicator is inapplicable to the apparatus 600.

Optionally, as an embodiment, the apparatus 600 further includes a receiving module, which may be configured to receive indication information, where the indication information is used for indicating at least one of the following: the random access resource type to which the backoff indicator is applicable, and whether the backoff indicator is applicable to the apparatus 600, where the random access resource type includes the first random access resource and/or the second random access resource.

Optionally, as an embodiment, the receiving module may be configured to receive a radio resource control RRC message of a broadcasting type.

Optionally, as an embodiment, the processing module 602 may be configured to multiply a time generated by the backoff indicator by a scaling-factor, to obtain the time delay, where the scaling-factor is a positive number less than or equal to 1.

Optionally, as an embodiment, the apparatus 600 further includes a receiving module, which may be configured to receive an RRC message, where the RRC message is used for configuring the scaling-factor for the IAB node.

Optionally, as an embodiment, the receiving a backoff indicator includes: receiving a random access response RAR message, where the RAR message includes a T1 indication field and a T2 indication field, a value of the T1 indication field is 0, and a value of the T2 indication field is 0; or, the RAR message includes a T indication field, and a value of the T indication field is 0.

Optionally, as an embodiment, the first random access resource corresponds to the backoff indicator.

The apparatus 600 according to this embodiment of this application may refer to and correspond to a flow process of the method 200 according to the embodiments of this application, and, each unit/module in the apparatus 600 and the foregoing other operations and/or functions are respectively designed to achieve the corresponding flow process in the method 200 and can achieve the same or equivalent technical effects. For brevity, details are not described herein again.

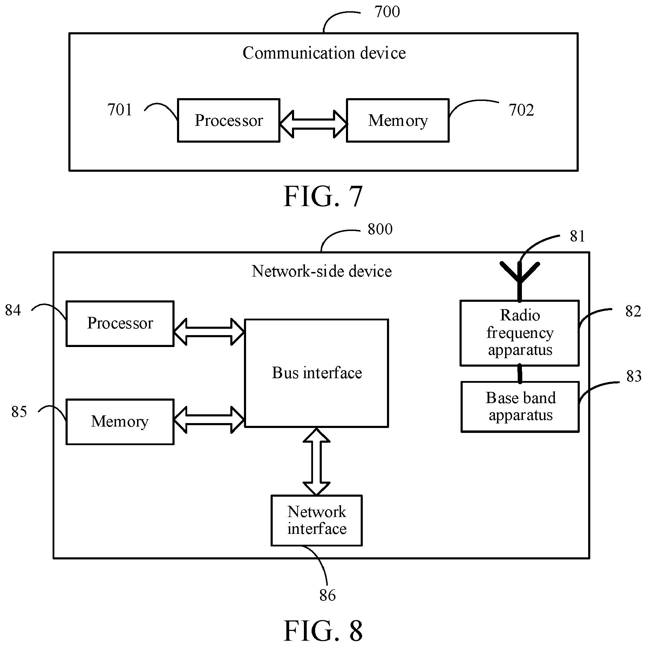

Optionally, as shown in FIG. 7, the embodiments of this application further provide a communication device 700, including a processor 701, a memory 702, and a program or instructions stored in the memory 702 and runnable on the processor 701. For example, when the communication device 700 is a terminal, when the program or instructions are executed by the processor 701, each process of the foregoing random access method embodiments is implemented, and the same technical effects can be achieved. When the communication device 700 is a network-side device, when the computer program or instructions are executed by the processor 701, each process of the foregoing random access method embodiments is implemented, and the same technical effects can be achieved, which is not described in detail herein again to avoid repetition.

Specifically, the embodiments of this application further provide a network-side device. As shown in FIG. 8, a network-side device 800 includes: an antenna 81, a radio frequency apparatus 82, and a base band apparatus 83. The antenna 81 is connected to the radio frequency apparatus 82. In an upward direction, the radio frequency apparatus 82 receives information through the antenna 81 and transmits the received information to the base band apparatus 83 for processing. In a downward direction, the base band apparatus 83 processes the information to be transmitted and transmits the processed information to the radio frequency apparatus 82. The radio frequency apparatus 82 processes the received information and transmits the processed received information out through the antenna 81.

The foregoing radio frequency apparatus may be located in the base band apparatus 83, and the method executed by the network-side device in the above embodiments may be implemented in the base band apparatus 83, where the base band apparatus 83 includes a processor 84 and a memory 85.

The base band apparatus 83 may, for example, include at least one base band board, where a plurality of chips are disposed on the base band board. As shown in FIG. 8, one of the chips is, for example, the processor 84, connected with the memory 85 to invoke a program in the memory 85 to perform network device operations shown in the method embodiments above.

The base band apparatus 83 may further include a network interface 86, configured to interact information with the radio frequency apparatus 82, and the network interface is, for example, a common public radio interface (common public radio interface, CPRI).

Specifically, the network-side device of this embodiment of this application further includes: instructions or a program stored in the memory 85 and runnable on the processor 84, and the processor 84 invokes the instructions or the program in the memory 85 to perform the method performed by the modules shown in FIG. 6, and achieves the same technical effect, which is described in detail herein to avoid repetition.

The embodiments of this application further provide a readable storage medium, storing a program or instructions, where the program or the instructions, when being executed by a processor, implement each process of the foregoing random access method embodiments, and the same technical effect can be achieved, which is not described in detail herein again to avoid repetition.

The processor is the processor in the terminal described in the above embodiment. The readable storage medium includes a computer-readable storage medium, for example, a computer read-only memory (Read-Only Memory, ROM).

The embodiments of this application further provides a chip, including a processor and a communication interface, where the communication interface is coupled to the processor, and the processor is configured to run a program or instructions to implement each process of the foregoing random access method embodiments and can achieve the same technical effects, which is not described in detail herein again to avoid repetition.

It is to be understood that the chip mentioned in this embodiment of this application may also be referred to as a system-level chip, a system chip, a chip system, a system chip on a chip, or the like.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by a sentence "including one" does not exclude that there are still other same elements in the process, method, object, or apparatus. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the descriptions of the foregoing implementations, a person skilled in the art may clearly understand that the method according to the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

## Claims

1. A random access method, applied to an integrated access and backhaul IAB node and comprising:
performing at least one of the following in a case of receiving a backoff indicator during a random access process initiated through a first random access resource:
generating a time delay according to the backoff indicator, and initiating the random access process again after the time delay expires; and
ignoring the backoff indicator, and initiating the random access process again through the first random access resource or a second random access resource.

2. The method according to claim 1, wherein the initiating the random access process again after the time delay expires comprises:
initiating the random access process again through the first random access resource or the second random access resource after the time delay expires.

3. The method according to claim 1 or 2, wherein
the first random access resource is an IAB dedicated random access resource, and the second random access resource is a common random access resource; or,
the first random access resource is a common random access resource, and the second random access resource is an IAB dedicated random access resource.

4. The method according to claim 1, wherein the performing at least one of the following comprises:
performing at least one of the following according to a random access resource type to which the backoff indicator is applicable, and/or, whether the backoff indicator is applicable to the IAB node,
wherein the random access resource type comprises the first random access resource and/or the second random access resource.

5. The method according to claim 4, wherein the IAB node ignores the backoff indicator, and initiates the random access process again through the first random access resource or the second random access resource,
wherein the first random access resource is an IAB dedicated random access resource, and the second random access resource is a common random access resource; and
the backoff indicator is applicable to the common random access resource, and is inapplicable to the IAB dedicated random access resource.

6. The method according to claim 4, wherein the IAB node generates the time delay according to the backoff indicator, and initiates the random access process again after the time delay expires,
wherein the first random access resource is a common random access resource, and the second random access resource is an IAB dedicated random access resource; and
the backoff indicator is applicable to the common random access resource, and is inapplicable to the IAB dedicated random access resource.

7. The method according to claim 4, wherein the IAB node generates the time delay according to the backoff indicator, and initiates the random access process again after the time delay expires,
wherein the first random access resource is a common random access resource, and the second random access resource is an IAB dedicated random access resource, or, the first random access resource is the IAB dedicated random access resource, and the second random access resource is the common random access resource; and
the backoff indicator is applicable to the common random access resource and the IAB dedicated random access resource.

8. The method according to claim 4, wherein the IAB node ignores the backoff indicator, and initiates the random access process again through the first random access resource or the second random access resource,
wherein the backoff indicator is inapplicable to the IAB node.

9. The method according to claim 4, wherein the method further comprises: receiving indication information, wherein the indication information is used for indicating at least one of the following: the random access resource type to which the backoff indicator is applicable, and whether the backoff indicator is applicable to the IAB node,
wherein the random access resource type comprises the first random access resource and/or the second random access resource.

10. The method according to claim 9, wherein the receiving indication information comprises:
receiving a radio resource control RRC message of a broadcasting type.

11. The method according to claim 1, wherein the generating a time delay according to the backoff indicator comprises:
multiplying a time generated by the backoff indicator by a scaling-factor, to obtain the time delay,
wherein the scaling-factor is a positive number less than or equal to 1.

12. The method according to claim 11, wherein before the generating a time delay according to the backoff indicator, the method further comprises:
receiving an RRC message, wherein the RRC message is used for configuring the scaling-factor for the IAB node.

13. The method according to claim 1, wherein the receiving a backoff indicator comprises: receiving a random access response RAR message,
wherein the RAR message comprises a T1 indication field and a T2 indication field, a value of the T1 indication field is 0, and a value of the T2 indication field is 0; or,
the RAR message comprises a T indication field, and a value of the T indication field is 0.

14. The method according to claim 1, wherein
the first random access resource corresponds to the backoff indicator.

15. A random access apparatus, comprising:
a processing module, configured to perform at least one of the following in a case of receiving a backoff indicator during a random access process initiated through a first random access resource:
generating a time delay according to the backoff indicator, and initiating the random access process again after the time delay expires; and
ignoring the backoff indicator, and initiating the random access process again through the first random access resource or a second random access resource.

16. The apparatus according to claim 15, wherein the processing module is configured to initiate the random access process again through the first random access resource or the second random access resource after the time delay expires.

17. The apparatus to claim 15 or 16, wherein
the first random access resource is an IAB dedicated random access resource, and the second random access resource is a common random access resource; or,
the first random access resource is a common random access resource, and the second random access resource is an IAB dedicated random access resource.

18. The apparatus according to claim 15, wherein the processing module is configured to perform at least one of the following according to a random access resource type to which the backoff indicator is applicable, and/or, whether the backoff indicator is applicable to the apparatus,
wherein the random access resource type comprises the first random access resource and/or the second random access resource.

19. The apparatus according to claim 18, wherein
the first random access resource is an IAB dedicated random access resource, the second random access resource is a common random access resource, and the backoff indicator is applicable to the common random access resource, and is inapplicable to the IAB dedicated random access resource; or,
the first random access resource is a common random access resource, the second random access resource is an IAB dedicated random access resource, and the backoff indicator is applicable to the common random access resource, and is inapplicable to the IAB dedicated random access resource; or,
the first random access resource is a common random access resource, and the second random access resource is an IAB dedicated random access resource, or, the first random access resource is the IAB dedicated random access resource, and the second random access resource is the common random access resource, and the backoff indicator is applicable to the common random access resource and the IAB dedicated random access resource; or,
the backoff indicator is inapplicable to the apparatus.

20. The apparatus according to claim 18, further comprising:
a receiving module, configured to receive indication information, wherein the indication information is used for indicating at least one of the following: the random access resource type to which the backoff indicator is applicable, and whether the backoff indicator is applicable to the apparatus,
wherein the random access resource type comprises the first random access resource and/or the second random access resource.

21. The apparatus according to claim 15, wherein the processing module is configured to multiply a time generated by the backoff indicator by a scaling-factor, to obtain the time delay,
wherein the scaling-factor is a positive number less than or equal to 1.

22. The apparatus according to claim 15, wherein
the first random access resource corresponds to the backoff indicator.

23. A network-side device, comprising a processor, a memory, and a program or instructions stored on the memory and runnable on the processor, wherein the program or instructions, when being executed by the processor, implement the random access method according to any one of claims 1 to 14.

24. A readable storage medium, storing a program or instructions, wherein the program or instructions, when being executed by a processor, implement the random access method according to any one of claims 1 to 14.

25. A chip, comprising a processor and a communication interface, wherein the communication interface is coupled to the processor, and the processor is configured to run a program or instructions to implement the random access method according to any one of claims 1 to 14.

26. A computer program product, stored on a readable storage medium, wherein the computer program product is executed by at least one processor to implement the steps of the random access method according to any one of claims 1 to 14.

27. A network-side device, configured to perform the steps of the random access method according to any one of claims 1 to 14.
